# EUROPEAN PATENT APPLICATION

(11) **EP 4 492 838 A1**
(43) Date of publication of application: **15.01.2025**
(21) Application number: 23766469.3
(22) Date of filing: 16.02.2023
(51) Int. Cl.: H04W 8/22, H04W 80/02, H04W 84/12, H04W 92/18

(54) **COMMUNICATION DEVICE, COMMUNICATION DEVICE CONTROL METHOD, AND PROGRAM**

(30) Priority: 11.03.2022 JP 2022038180
(71) Applicant: CANON KABUSHIKI KAISHA, Tokyo 146-8501 (JP)
(72) Inventor: YOSHIKAWA Yuki, Tokyo 146-8501 (JP)
(74) Representative: Canon Europe Limited
(86) International application number: PCT/JP2023/005410
(87) International publication number: WO 2023/171289

(57) **Abstract**

To provide a notification of information on, of channels for communication with a frequency bandwidth exceeding 160 MHz, Primary Channel compliant with Wi-Fi Aware by transmitting a frame compliant with Wi-Fi Aware.

## Description

### Technical Field

The present invention relates to a radio communication technique.

### Background Art

In recent years, wireless LAN systems compliant with IEEE802.11 have been widely used. Along with this, techniques for easily discovering nearby wireless local area network (LAN) applications and information with low power consumption have been proposed. As a communication standard for discovering communication apparatuses and the services provided by the communication apparatuses with low power consumption, Wi-Fi Aware is specified by Wi-Fi Alliance. PTL 1 describes Neighbor Awareness Networking (NAN) specified by Wi-Fi Alliance as a standard for discovering communication apparatuses and the services provided by these apparatuses with low power consumption. Here, Wi-Fi Aware and the NAN standard are the same.

In Wi-Fi Aware, for example, a communication apparatus capable of communication with an 80 MHz frequency bandwidth provides notification about the available Primary Channel within the 80 MHz frequency bandwidth. Here, the Primary Channel refers to the channel used for communicating management frames, for example, for the communication apparatus to connect with another communication apparatus.

In contrast, wireless local area network (LAN) techniques are standardized by IEEE802.11, the standardization body for wireless LAN techniques. The standards of the wireless LAN techniques include IEEE802.11/a/b/g/n/ac/ax, etc. Here, IEEE stands for the Institute of Electrical and Electronics Engineers. For IEEE802.11, IEEE802.11be standardization efforts are currently underway. The IEEE802.11be standard is considering communication using a frequency bandwidth exceeding 160 MHz.

### Citation List

### Patent Literature

PTL 1: US patent Application Publication No. 2014/0302787

### Summary of Invention

### Technical Problem

In the Wi-Fi Aware standard so far, however, there is no defined mechanism for announcing communication using a frequency bandwidth exceeding 160 MHz. For this reason, in the case of communication using a frequency bandwidth exceeding 160 MHz in the current Wi-Fi Aware, information on the Primary Channel within the frequency bandwidth exceeding 160 MHz cannot be provided.

The present invention has been made in consideration of the above issue, and it is an object for a communication apparatus capable of communication with a frequency band exceeding 160 MHz to provide information on the Primary Channel in the Wi-Fi Aware standard.

### Solution to Problem

To solve the above problem, a communication apparatus according to the present invention includes communication means for communicating a frame compliant with Wi-Fi Aware; and notification means for providing a notification of information on, of channels for communication with a frequency bandwidth exceeding 160 MHz, Primary Channel compliant with Wi-Fi Aware by transmitting the frame with the communication means.

### Advantageous Effects of Invention

According to the present invention, a communication apparatus capable of communication with a frequency band exceeding 160 MHz can provide a notification of information on Primary Channel in the Wi-Fi Aware standard.

### Brief Description of Drawings

[Fig. 1] Fig. 1 illustrates an example of the configuration of a radio communication system.
[Fig. 2] Fig. 2 is a block diagram illustrating an example of the hardware configuration of a NAN 101.
[Fig. 3] Fig. 3 is a block diagram illustrating an example of the functional configuration of the NAN 101.
[Fig. 4] Fig. 4 is a diagram illustrating the frame format of extended NAN Action Frame according to the embodiment.
[Fig. 5] Fig. 5 is a diagram illustrating an example of a Primary Channel Bitmap field according to the embodiment.
[Fig. 6] Fig. 6 is a diagram illustrating an example of the Primary Channel Bitmap field according to the embodiment.
[Fig. 7] Fig. 7 is a diagram illustrating an example of the Primary Channel Bitmap field according to the embodiment.

### Description of Embodiments

Embodiments of the present invention will be described hereinbelow with reference to the drawings. Although the communication apparatuses here refer to communication apparatuses having a wireless LAN communication function compliant with the IEEE802.11 standard series, this is illustrative only. The following communication apparatuses are NAN devices capable of discovering other communication apparatuses and the services provided by the other communication apparatuses using NAN specified by Wi-Fi Alliance. This is also illustrative only. The following descriptions use specialized terminology corresponding to a predetermined standard, but similar descriptions may be applied to other standards of the same type.

Neighbor awareness networking (NAN) will be described. In NAN, service information is communicated during the period called Discovery Window (DW). Examples of the service information include a "Subscribe message", a signal used to discover services, and a "Publish message", a signal used to indicate that services are available. DW refers to the designated period per channel during which multiple devices executing NAN can converge. A collection of communication apparatuses that share the schedule of DW is referred to as a NAN cluster.

The individual communication apparatuses that belong to the NAN cluster act as any of Master, Non-Master Sync, and Non-Master Non-Sync. A communication apparatus that acts as Master transmits a NAN Synchronization beacon (hereinafter referred to as "Sync beacon") for each communication apparatuses to identify and synchronize with the DW. The communication apparatus that acts as Master also transmits a NAN Discovery beacon, a signal used to make communication apparatuses that do not belong to the NAN cluster recognize the NAN cluster, to the communication apparatuses. The NAN Discovery beacon is transmitted, for example, every 100 TU (Time Unit, where 1 TU is equal to 1024psec), even outside the DW period. In each NAN cluster, at least one communication apparatus acts as Master.

A communication apparatus that acts as Non-Master Sync transmits the NAN Sync beacon but does not transmit the NAN Discovery beacon. A communication apparatus that acts as Non-Master Non-Sync transmit neither of the NAN Sync beacon and the NAN Discovery beacon.

The communication apparatuses participating in the NAN cluster synchronize with the DW periods at regular intervals according to the NAN Sync beacon and communicate service information during the DW periods. Specifically, the individual communication apparatuses communicate a Subscribe message, a signal for discovering a service during the DW periods, and a Publish message, a signal for announcing that the service is available, to each other. The communication apparatuses can also exchange Follow-up messages for exchanging additional information on the service during the DW periods. The Publish, Subscribe, and Follow-up messages are collectively referred to as service discovery frames (SDFs). The communication apparatuses may advertise or discover a service by exchanging SDFs.

In general, after discovering/detecting a service, NAN devices may actually perform communications related to an application for executing the service. In this case, the NAN devices can establish PostNAN for the communication related to the application, rather than NAN. PostNAN is a network different from that of the NAN cluster. Examples of PostNAN include an infrastructure network, an independent basic service set (IBSS), and Wi-Fi Direct. The NAN devices can communicate using an application outside the DW periods by establishing Post NAN.

NAN devices can also establish one-to-one connections with the other NAN devices on the NAN to communicate about the application without constituting a different network from that of the NAN cluster, such as Post NAN. The communication related to the application compliant with the NAN standard is referred to as NAN Data Path (NDP). NAN devices can execute NDP during a period not overlapping with the DW periods in the NAN cluster. In this case, the NAN devices can execute negotiations on the timing (period) to execute one-to-one NDP with the designated NAN device before executing one-to-one NDP.

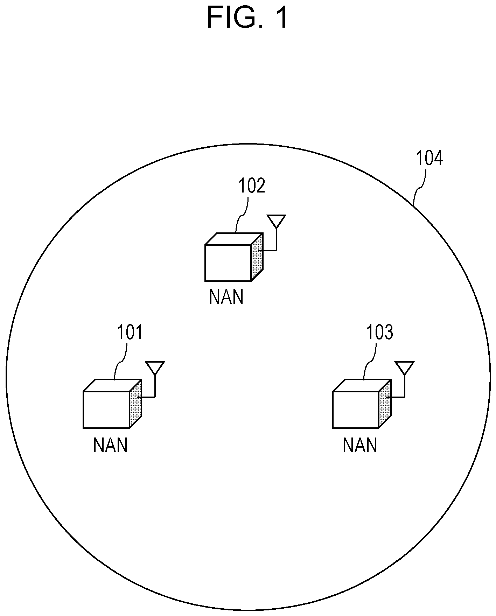

An example of the configuration of a radio communication system according to an embodiment of the present invention will be described with reference to Fig. 1. The radio communication system of this embodiment includes NAN 101 to NAN 103, which are communication apparatuses (NAN devices) each are compliant with the NAN standard and participating in a NAN cluster 104. In this embodiment, the NAN devices (NANs 101 to 103) participating in the NAN cluster 104 constitute a network on frequency channel 6 (6 ch) in the 2.4 GHz band. The NAN cluster 104 is a NAN cluster in which the duration of a DW period is 16 TU and the time interval from the DW period start timing to the next DW period start timing is 512 TU. Each DW period consists of 16 DW periods, DW0 to DW15. The 16th DW period after DWn (where n is an integer from 0 to 15) is also referred to as DWn. In other words, DW16 corresponds to the next DW0. The NAN 101 to NAN 103 participating in the NAN cluster 104 can regularly receive a radio signal at least during DW0.

The NAN 101 is a communication apparatus capable of executing the following processes. The NAN 101 participates in the NAN cluster 104 as Non-Master Non-Sync. The NAN 102 is a communication apparatus participating in the NAN cluster 104 as Master. The NAN 102 receives a radio signal during all the DW periods and transmits a NAN Sync beacon during all the DW periods. The NAN 103 is a communication apparatus participating in the NAN cluster 104 as Non-Master non-Sync.

The NAN devices 101, 102, and 103 participating in the NAN cluster 104 are capable of executing radio communication compliant with the IEEE802.11be standard. IEEE stands for the Institute of Electrical and Electronics Engineers. The NAN devices 101, 102, and 103 can communicate on the 2.4 Hz frequency band, 5 GHz frequency band, and 6 GHz frequency bands. The frequency bands that the communication apparatuses use are illustrative only and may include, for example, 60 GHz frequency band. The NAN devices 101, 102, and 103 can communicate using 20 MHz, 40 MHz, 80 MHz, 160 MHz, and 320 MHz bandwidths. The bandwidths that the communication apparatuses use are illustrative only and may include, for example, 240 MHz and 4MHz bandwidths.

The NAN devices 101, 102, and 103 are compliant with the IEEE802.11be standard, but in addition, may be compliant with legacy standards that precede the IEEE802.11be standard. Specifically, the NAN devices 101, 102, and 103 may be compliant with at least one of the IEEE802.11a/b/g/n/ac/ax standards. Alternatively, the NAN devices 101, 102, and 103 may be compliant with standards that succeed the IEEE802.11be.

### Configuration of NAN 101

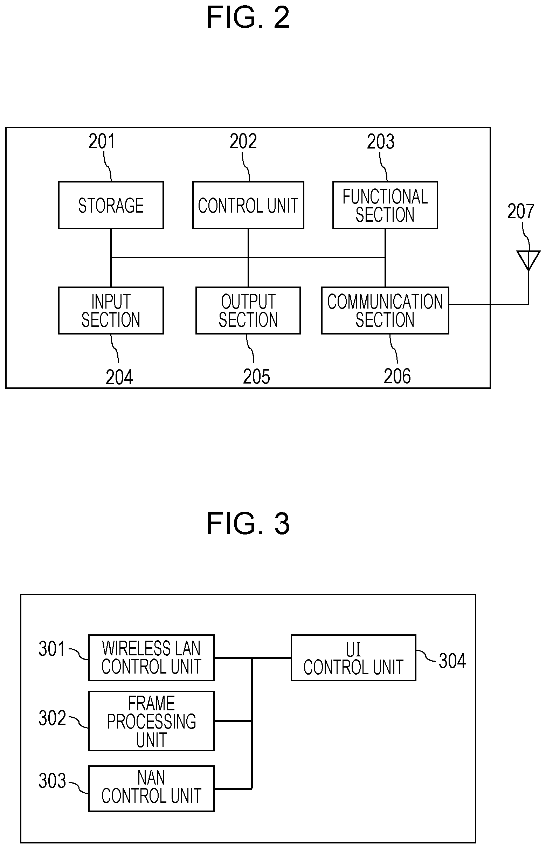

Fig. 2 illustrates the hardware configuration of the NAN 101 according to this embodiment. In one example of the hardware configuration, the NAN 101 includes a storage 201, a control unit 202, a functional section 203, an input section 204, a display 205, a communication section 206, and an antenna 207.

The storage 201 is constituted of one or both of one or more read only memories (ROMs) and random access memories (RAMs). The storage 201 stores programs for executing a variety of operations describe below and a variety of information, such as communication parameters for radio communication. In addition to the memories, such as the ROM and the RAM, the storage 201 may be constituted by a flexible disk, a hard disk, an optical disk, a magnetooptical disk, a compact-disk read only memory (CD-ROM), a compact disk recordable (CD-R), a magnetic tape, a non-volatile memory card, a digital versatile disc (DVD), or another storage media.

The control unit 202 is constituted by one or more central processing units (CPUs) or micro processing units (MPUs). The control unit 202 controls the entire NAN 101 by executing the programs stored in the storage 201. The control unit 202 may control the entire NAN 101 in cooperation with the programs stored in the storage 201 and an operating system (OS).

The control unit 202 executes predetermined processes, such as image capturing, printing, and projection, by controlling the functional section 203. The functional section 203 is the hardware for the NAN 101 to perform a predetermined process. For example, if the NAN 101 functions as a camera, the functional section 203 is an image capturing unit, performing image capture processing. For example, if the NAN 101 functions as a printer, the functional section 203 is a printing unit, performing print processing. For example, if the NAN 101 functions as a projector, the functional section 203 is a projection unit, performing projection processing. The data to be processed by the functional section 203 may be data stored in the storage 201 or data obtained by communicating with another NAN device via the communication section 206 described below.

The input section 204 receives a variety of operations from the user. The display 205 displays a variety of information to the user. Both the input section 204 and the display 205 may be implemented by a single module, like a touch panel.

The communication section 206 controls radio communication compliant with the IEEE802.11 standard series and Internet protocol (IP) communication. The communication section 206 transmits and receives radio signals for radio communication by controlling the antenna 207. The NAN 101 communicates content, such as image data, document data, and video data, with other communication apparatuses via the communication section 206. Under the control of the control unit 202, the communication section 206 receives no power during DW periods while radio signals are not being transmitted or received and may enter a doze mode.

Fig. 3 is a block diagram illustrating an example of the functional configuration of the NAN 101. The NAN 101 includes, as its functional configuration, for example, a wireless LAN control unit 301, a frame processing unit 302, a NAN control unit 303, and a user interface (UI) control unit 304.

The wireless LAN control unit 301 performs control for transmitting and receiving radio signals to/from the other wireless LAN devices such as NAN devices. For example, the wireless LAN control unit 301 executes communication control of wireless LAN based on the IEEE802.11 standard series.

The frame processing unit 302 performs the process of analyzing the frames received by the wireless LAN control unit 301 and creating frames according to an instruction of the NAN control unit 303.

The NAN control unit 303 performs control according to the NAN standard. For example, the NAN control unit 303 performs communication control according to the NAN standard via the communication section 206 (see Fig. 2).

The UI control unit 304 controls the display of a variety of information on the output section 205 (Fig. 2) and manages the operations performed on the input section 204 by the user of the device 101 to transmit necessary signals to the other functional section.

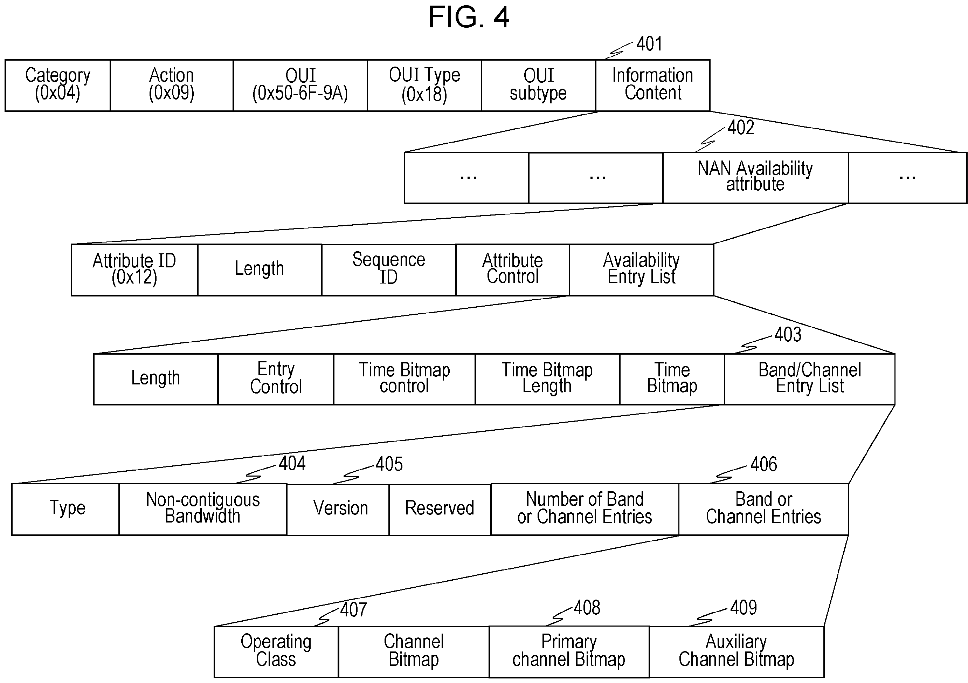

Fig. 4 illustrates the frame format of extended NAN Action Frame compliant with the NAN standard.

The extended NAN Action Frame includes a Category field, an Action field, an OUI field, an OUI Type field, an OUI Subtype field, and an Information Content field 401.

In this embodiment, the Information Content field 401 includes at least a NAN Availability Attribute field 402. The NAN Availability Attribute field 402 includes, for example, information for communication outside the DW, which is information for communication outside DW that is available to NAN devices. Examples of the communication outside the DW include NDP and Post NAN communication.

The NAN Availability Attribute field is a type of Schedule Attribute. The Schedule Attribute includes information on the scheduling of communication compliant with the NAN standard.

The NAN Availability Attribute field 402 includes at least a Band/Channel Entry List field 403. The Band/Channel Entry List field 403 includes information about the frequency channels on which the NAN device that sends the frames illustrated in Fig. 4 in NDP or Post NAN communication. For the Band/Channel Entry List field 403, fields corresponding to the number of Band/Channels available to the NAN device are prepared. For example, if the NAN device can use 1 ch and 19 ch, a Band/Channel Entry List field for 1 ch and a Band/Channel Entry List field for 19 ch are prepared.

The Band/Channel Entry List field 403 includes a Non-contiguous Bandwidth field 404, a Version field 405, and a Band or Channel Entries field 406.

The Non-contiguous Bandwidth field 404 is a field that indicates whether frequency bandwidths available to the NAN device are contiguous. If the NAN device can use contiguous frequency bandwidths, 0 is stored, and if the NAN device can use discontiguous frequency bandwidths, 1 is stored. For example, if the NAN device can use 80 + 80 MHz frequency bandwidth, 1 is stored in the Non-contiguous Bandwidth field 404.

In this embodiment, the Version field 405 that stores 1 indicates that a Primary Channel Bitmap field 408 is 2 bytes.

Although in this embodiment the Version field 405 is shown as a field indicating that the Primary Channel Bitmap field 408 is 2 bytes, this is illustrative only. For example, the value of Reserved in the extended NAN Action Frame illustrated in Fig. 4 may be used.

An Operating Class field 407 includes information on the frequency band available to the NAN device and the frequency band available to the NAN device. The field indicates that the NAN device can use, for example, 2.4 GHz or 5 GHz. The field also indicates that the NAN device can use, for example, 80 MHz frequency bandwidth or 320 MHz frequency bandwidth.

The Primary Channel Bitmap field 408 includes channel information for communicating a management frame for the NAN device to connect with another communication apparatus when performing NDP or Post NAN communication.

Suppose that the NAN device 101 searches for a device that provides a print service using Wi-Fi Aware and discovers the NAN device 102 that provides the print service. In this case, the NAN device 101 and the NAN device 102 need to establish a link to communicate print data. To establish the link in Post NAN communication, management frames need to be exchanged. The Primary Channel Bitmap field 408 includes information on the channel to be used in exchanging the management frames.

### First Embodiment

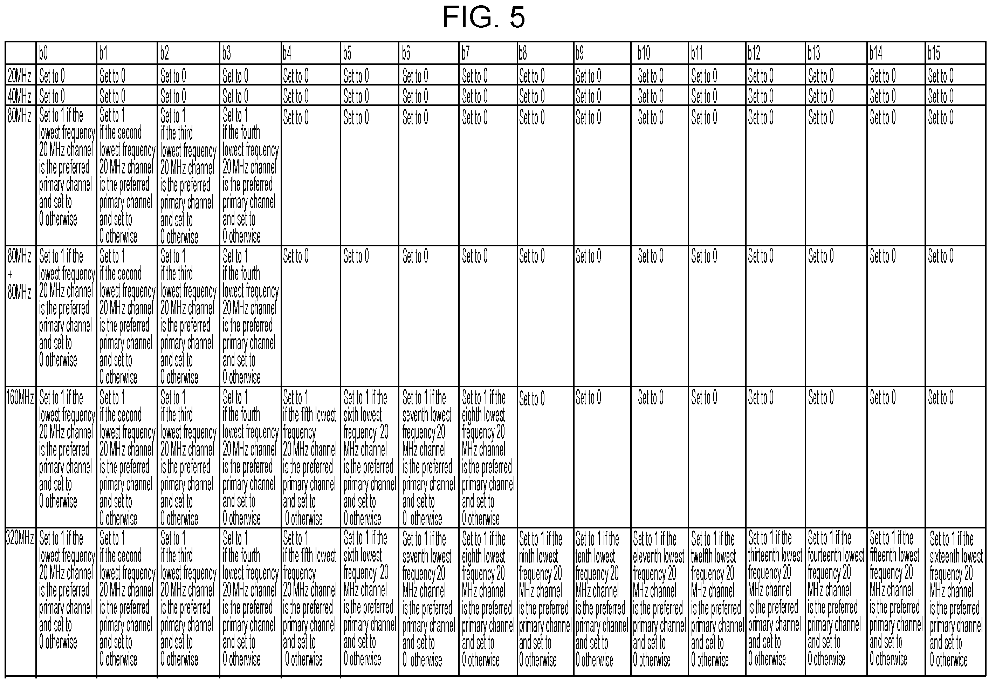

Fig. 5 illustrates the details of the Primary channel Bitmap field 408 illustrated in Fig. 4. In this embodiment, when 1 is stored in the Version field 405 in Fig. 4, the Primary channel Bitmap field 408 is set to 2 bytes.

Fig. 5 illustrates Primary Channels that are available to the NAN device using 16 bits (2 bytes) from b0 to b15. For example, to indicate that the lowest frequency bandwidth of 20 MHz in the 320 MHz bandwidth is available as the Primary channel for communicating management frames, 1 is stored in b0, and 0 is stored in the remaining b1 to b15. For example, to indicate that the second lowest 20 MHz frequency bandwidth in the 320 MHz bandwidth is available as the Primary channel for communicating management frames, 1 is stored in b1, and 0 is stored in the remaining fields.

In this embodiment, the NAN device can indicate multiple available Primary channels. For example, suppose that the NAN device indicates that the lowest frequency bandwidth of 20 MHz, the fifth lowest 20 MHz frequency bandwidth, and the 10th lowest 20 MHz frequency bandwidth are available as the Primary channel. In this case, in the Primary channel Bitmap field, 1 is stored in b0, b4, and b9, and 0 is stored in the other fields.

Although this embodiment illustrates an example in which when 1 is stored in the Version field 405, the Primary channel Bitmap field 408 is set to 2 bytes, this is illustrative only. For example, when the Operating Class field 406 indicates that the NAN device can use 6 GHz, the Primary channel Bitmap field 408 may be set to 2 bytes. According to this embodiment, setting the Primary channel Bitmap field to 2 bytes allows for announcing the Primary channels in the 320 MHz frequency bandwidth.

### Second Embodiment

The first embodiment illustrates an example in which the Primary channel Bitmap field is extended to 2 bytes, and Primary channels in the 320 MHz frequency bandwidth are indicated. This embodiment illustrates an example in which one of the Primary Channels in the 320 MHz frequency bandwidth available to the NAN device is indicated, with the Primary channel Bitmap field kept at 1 byte. This embodiment shows that when 1 is stored in the Version field 405 in Fig. 4, the Primary Channels in the 320 MHz frequency bandwidth in the Primary channel Bitmap field are available.

Although this embodiment shows the Version field 405 as a field indicating that the 320 MHz frequency bandwidth is indicated in the Primary Channel Bitmap field 408, this is illustrative only. For example, the value in the Reserved of the extended NAN Action Frame illustrated in Fig. 4 may be used.

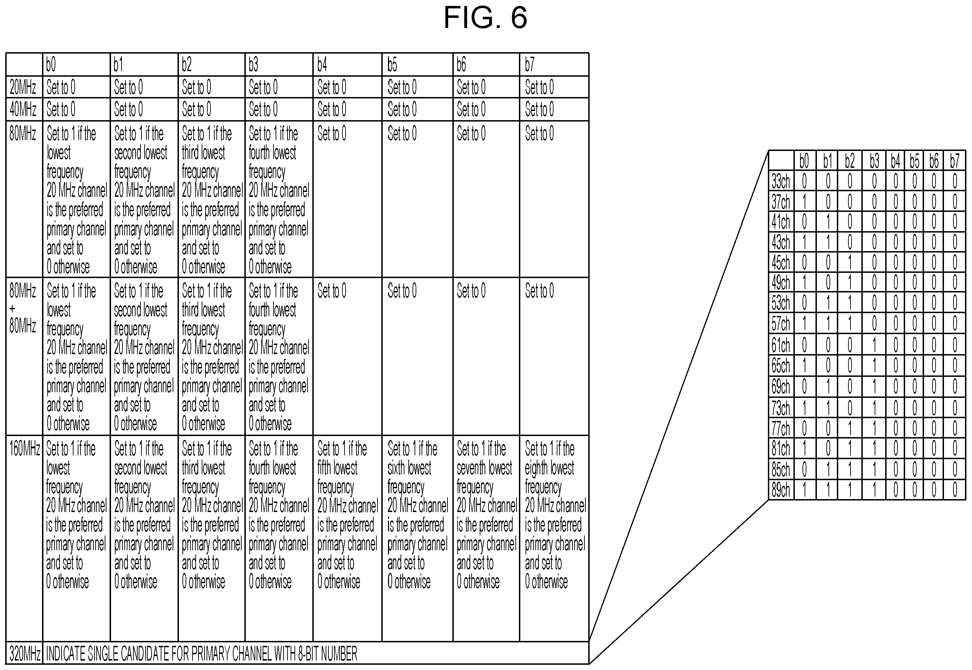

Fig. 6 illustrates the details of the Primary channel Bitmap field 408 of this embodiment.

In the 80 MHz and 160 MHz frequency bandwidths illustrated in Fig. 6, the NAN device can indicate multiple available Primary channels. For example, suppose that the NAN device indicates that the lowest frequency bandwidth of 20 MHz and the fourth lowest 20 MHz bandwidth are available as Primary channels. In this case, in the Primary channel Bitmap field, 1 is stored in b0 and b3, and 0 is stored in the other fields.

In contrast, in the 320 MHz frequency bandwidth illustrated in Fig. 6, a single Primary channel available to the NAN device can be indicated.

Suppose that the NAN device can use the 320 MHz frequency bandwidth including 33 ch to 89 ch. The 320 MHz frequency bandwidth includes the following frequency channels from the lower end: 33ch, 37ch, 41ch, 43ch, 45ch, 49ch, 53ch, 57ch, 61ch, 65ch, 69ch, 73ch, 77ch, 81ch, 85ch, and 89ch. When the NAN device indicates 37 ch as the Primary channel, 1 is stored in b1 because 37ch is the second lowest frequency channel, and 0 is stored in the other fields.

Although Fig. 5 illustrates an example in which the NAN device indicates only one available Primary channel using the former 4 bits from b0 to b3, this is illustrative only. For example, two Primary channels available to the NAN device may be indicated by indicating one Primary channel using the former 4 bits from b0 to b3 and one Primary channel using the latter 4 bits from b4 to b7.

If 160 MHz + 160 MHz is available, the NAN device indicates the former 160 MHz using the former 4 bits from b0 to b3, and the latter 160 MHz Primary channel using the latter 4 bits from b4 to b7.

According to this embodiment, Primary channels included in the 320 MHz frequency bandwidth that is available to the NAN device can be indicated, with the Primary channel Bitmap field kept at 1 byte.

### Third Embodiment

The second embodiment illustrates an example in which Primary channels included in the 320 MHz frequency bandwidth that is available to the NAN device is indicated, with the Primary channel Bitmap field kept at 1 byte. This embodiment illustrates an example in which Preferred Scan Channels (PSCs) are indicated as Primary channels, with the Primary channel Bitmap field kept at 1 byte. The PSCs are channels for a station (STA) to perform scanning to discover an access point (AP) at high speed. In the 6GHz frequency band, the PSCs are set at intervals of 80 MHz frequency bandwidth. Because of this, the 320 MHz frequency bandwidth includes four PSCs.

In this embodiment, in the case where 1 is stored in the Version field 405 in Fig. 4, the Primary channel Bitmap field indicates that Primary channels in the 320 MHz frequency bandwidth are available.

Although this embodiment shows the Version field 405 as a field indicating that the 320 MHz frequency bandwidth is indicated in the Primary Channel Bitmap field 408, this is illustrative only. For example, the value in the Reserved of the extended NAN Action Frame illustrated in Fig. 4 may be used.

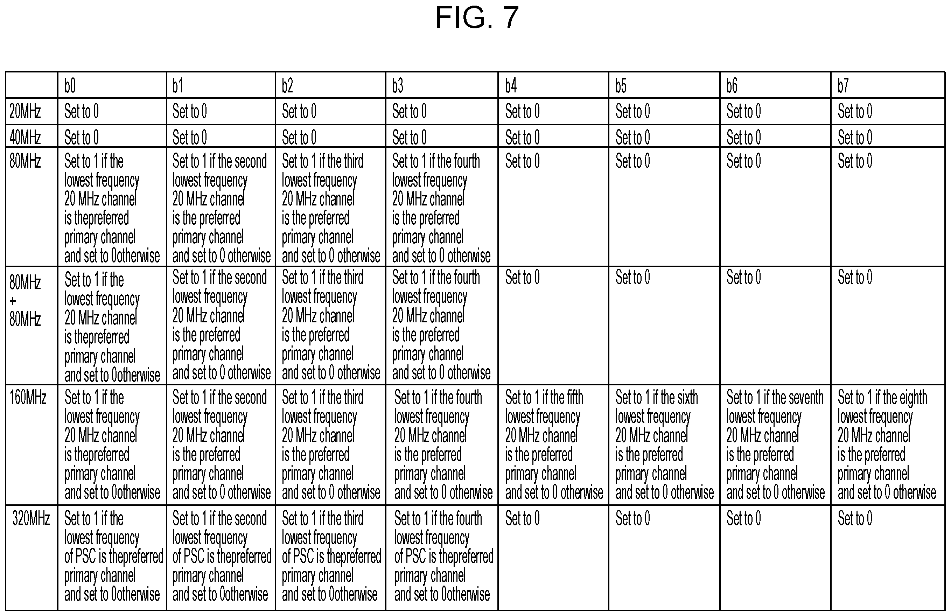

Fig. 7 illustrates the details of the Primary channel Bitmap field 408 of this embodiment.

Fig. 7 illustrates Primary channels available to the NAN device using b0 to b7. For example, to indicate that the PSC of the lowest frequency channel in the 320 MHz bandwidth is available as the Primary channel for communicating the management frame, 1 is stored in b0, and 0 is stored in the remaining b1 to b7. To indicate that the PSC of the second lowest frequency channel in the 320 MHz bandwidth is available as the Primary channel for communicating the management frame, 1 is stored in b1, and 0 is stored in the remaining fields.

The NAN device can indicate multiple available Primary channels. For example, to indicate that the NAN device can use a PSC, which is the lowest frequency channel, and the PSC of the third lowest frequency bandwidth as Primary channels, 1 is stored in b0 and b2, and 0 is stored in the other fields.

According to this embodiment, by indicating the PSC, Primary channels in the 320 MHz frequency bandwidth can be indicated, with the Primary channel Bitmap field kept at 1 byte.

### Other Embodiments

Although the embodiments illustrate extended NAN Action Frames compliant with NAN, this is illustrative only.

For example, the information included in the NAN Attributes shown in the embodiments may be added to the NAN Attributes of Service Discovery Frame or NAN Information Elements. The NAN Information Elements are provided in the NAN Sync beacon or the NAN Discovery beacon.

Instead of the NAN Availability Attribute field, an Extended NAN Availability Attribute field may be newly prepared. This field includes the same information as that of the NAN Availability Attribute field 402, but the Primary Channel Bitmap field is set at 2 bytes. Since the Primary Channel Bitmap field of the Extended NAN Availability Attribute field is set to 2 bytes, Primary channels in the 320 MHz frequency bandwidth can be indicated.

The Primary Channel Bitmap field of the Extended NAN Availability Attribute field may be expressed as in Fig. 6 according to the second embodiment. In this case, 4 bits are sufficient for this field, but a Primary Channel Bitmap field of 1 octet or 2 octets may be prepared instead of 4 bits.

The Primary Channel Bitmap field of the Extended NAN Availability Attribute field may also be expressed as in Fig. 7 according to the third embodiment. In this case, the Extended NAN Availability Attribute is used only when the 320 MHz frequency bandwidth illustrated in Fig. 7 is available.

The names of the fields/subfields and the bit positions/sizes are not limited to those listed in the tables, and the same information may be stored with different field names/subfield names or in different orders or sizes.

The software program code that implements the above-described functions may be supplied to a system or apparatus via a recording medium. The computer (a central processing unit [CPU] or a micro processing unit [MPU]) of the system or apparatus can then read and execute the program code stored on the recording medium. In this case, the program code itself read out from the storage medium implements the functions of the embodiments. The storage medium storing the program code constitutes the above-described apparatus.

Examples of the storage medium for supplying the program code may include a flexible disk, a hard disk, an optical disk, a magnetooptical disk, a CD-ROM, a CD-R, a magnetic tape, a non-volatile memory card, a ROM, and a DVD.

The above functions may be implemented not only by executing the program code read by the computer but also by executing part or all of the actual processes based on the instructions of the program code using an OS operating on the computer. OS stands for Operating System.

The program code read from the storage medium is written into the memory of a feature expansion board inserted in the computer or a feature expansion unit connected to the computer. The CPU of the feature expansion board or the feature expansion unit may then execute part or all of the actual processes to implement the above functions.

Program(s) for implementing one or more of the above functions of the above embodiments may be supplied to a system or apparatus via a network or a storage medium, and the present invention can also be realized by one or more processors of the computer of the system or apparatus that reads out and executes the program(s). The present invention can also be realized by a circuit (e.g., application specific integrated circuit [ASIC]) for implementing one or more functions.

It is to be understood that the present invention is not limited to the above embodiments and that various changes and modifications may be made without departing from the spirit and scope of the invention. Accordingly, the following claims are appended to disclose the scope of the invention.

This application claims the benefit of Japanese Patent Application No. 2022-038180, filed March 11, 2022, which is hereby incorporated by reference herein in its entirety.

## Claims

1. A communication apparatus compliant with Wi-Fi Aware, the communication apparatus comprising:
communication means for communicating a frame compliant with Wi-Fi Aware; and
notification means for providing a notification of information on, of channels for communication with a frequency bandwidth exceeding 160 MHz, Primary Channel compliant with Wi-Fi Aware by transmitting the frame with the communication means.

2. The communication apparatus according to Claim 1, wherein, when the communication apparatus is capable of communication in a 6 GHz frequency band, the notification means provides a notification of the information on Primary Channel.

3. The communication apparatus according to Claim 1 or 2, wherein the notification means provides a notification of Preferred Scan Channels (PSCs) as the information on Primary Channel

4. The communication apparatus according to any one of Claims 1 to 3, wherein the information on Primary Channel is included in Schedule Attribute of the frame.

5. The communication apparatus according to any one of Claims 1 to 3, wherein the information on Primary Channel is included in NAN Availability Attribute of the frame

6. The communication apparatus according to any one of Claims 1 to 3, wherein the information on Primary Channel is included in NAN Information Elements of the frame.

7. The communication apparatus according to any one of Claims 1 to 6, wherein the information on Primary Channel is information on a channel for communicating a management frame compliant with IEEE802.11 standard series

8. The communication apparatus according to any one of Claims 1 to 7, wherein the frame is NAN Action Frame compliant with Wi-Fi Aware.

9. The communication apparatus according to any one of Claims 1 to 7, wherein the frame is Service Discovery Frame (SDF) frame compliant with Wi-Fi Aware

10. The communication apparatus according to any one of Claims 1 to 7, wherein the frame is NAN Synchronization Beacon compliant with Wi-Fi Aware.

11. The communication apparatus according to any one of Claims 1 to 7, wherein the frame is NAN Discovery Beacon compliant with Wi-Fi Aware.

12. A method of communication of a communication apparatus compliant with Wi-Fi Aware, the method comprising:
communication step of communicating a frame compliant with Wi-Fi Aware; and
notification step of providing a notification of information on, of channels for communication with a frequency bandwidth exceeding 160 MHz, Primary Channel compliant with Wi-Fi Aware by transmitting the frame in the communication step.

13. A program for causing a computer to function as the individual means of the communication apparatus according to any one of Claims 1 to 11.
